# EUROPEAN PATENT SPECIFICATION

(11) **EP 4 223 135 B1**
(45) Date of publication and mention of the grant of the patent: **21.02.2024**
(21) Application number: 23169306.0
(22) Date of filing: 06.07.2017
(51) Int. Cl.: A23G 9/28

(54) **PRODUCT DISPENSING MACHINE**
PRODUKTAUSGABEMASCHINE
MACHINE DE DISTRIBUTION DE PRODUITS

(30) Priority: 06.07.2016 US 201662358702 P
(43) Date of publication of application: 09.08.2023
(62) Divisional of application: 17740858.0
(73) Proprietor: Taylor Commercial Foodservice, LLC, Rockton, IL 61072 (US)
(72) Inventor: MINARD, James, Illinois, 61072 (US)
(74) Representative: McNamara, Kathryn

(56) References cited:
- EP-A1- 2 189 067
- US-A1- 2008 127 837
- US-A1- 2012 312 049

## Description

### BACKGROUND

The present disclosure relates to a product dispensing machine, and more particularly, to a dispensing machine for a product of human consumption.

Traditional product dispensing machines such as, for example, soft serve ice cream machines and shake machines typically require two different machines. More recent dispensing machines may include the ability to dispense two different products or two different product consistencies, however, internal to such machines remains a multitude of components similar in number to that of two machines. Unfortunately, such redundancies may lead to large machine footprints, high manufacturing costs and robustness and maintenance issues.

US2008/127837 is concerned with a machine for making and dispensing both ice creams and shakes. The machine comprises first and second nozzles for dispensing the respective products. EP2189067 discloses a machine for making food products such as ice creams, shakes, soft ice creams and the like, the machine comprising a means for dispensing the product and a mixer with a disposable spoon, for mixing additional condiments with the dispensed product. US2012/312049 is concerned with a dispensing system for a chilled viscous edible composition, the system including a sensing system which provides information to improve the performance of the machine.

### SUMMARY OF THE INVENTION

A product dispensing machine comprising a container for storing a base product; a freeze circuit constructed and arranged to extract a first portion of the base product from the container and substantially freeze the first portion into a first consistency, wherein the freeze circuit is in fluid communication with the container; a liquid circuit constructed and arranged to extract a second portion of the base product from the container, wherein the liquid circuit is adapted to receive the base product from the container in liquid form; a blending chamber assembly in fluid communication with the frozen and liquid circuits, and constructed and arranged to blend the first and second portions into a second consistency; and a dispensing assembly in fluid communication with the blending chamber assembly, and constructed and arranged to selectively dispense the first portion in the first consistency, and the first and second portions in the second consistency, wherein the liquid circuit includes a pump for controlling the flow of the second portion to the blending chamber assembly, wherein the liquid circuit includes a temperature device configured to control the temperature of the second portion, wherein the temperature device includes one or both of a refrigeration unit and a heating element; wherein the temperature device is controlled to maintain the second portion at a predetermined temperature, wherein the predetermined temperature is a function of one of (i) a composition of the base product, (ii) a volumetric ratio of blended first and second portions that form the second consistency within the blending chamber assembly, and (iii) a controlled temperature of the first portion within the freeze circuit, wherein the dispensing assembly has a single dispensing nozzle for dispensing the product in the soft ice cream consistency and the shake consistency.

In some embodiments, the refrigeration unit is constructed and arranged to extract heat from the freeze circuit.

In some embodiments, the refrigeration unit is constructed and arranged to control temperature of the base product in the container.

In some embodiments, the freeze circuit includes a freezing cylinder defining a chamber in fluid communication between the container and the blending chamber assembly, and constructed and arranged to freeze the first portion via the refrigeration unit.

In some embodiments, the freeze circuit includes a beater disposed in the freezing cylinder for working the first portion.

In some embodiments, the liquid circuit includes a check valve for preventing flow from the blending chamber assembly to the temperature device and to the container.

In some embodiments, the product dispensing machine includes a controller constructed and arranged to control the refrigeration unit; and a human interface constructed and arranged to select between the first and second consistencies of the base product for dispensing through the dispensing assembly.

In some embodiments, the freeze circuit includes a freezing cylinder defining a chamber in fluid communication between the container and the blending chamber assembly and constructed and arranged to freeze the first portion via the refrigeration unit; a beater disposed in the freezing cylinder for working the first portion; and a pump for flowing the first portion from the container to the freezing cylinder, wherein the pump is controlled by the controller.

In some embodiments, the product dispensing machine includes a second container for storing an additive product; and an additive circuit constructed and arranged to flow the additive product from the second container and to the blending chamber assembly.

In some embodiments, the additive product includes a syrup.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a perspective view of a product dispensing machine as one exemplary embodiment of the present disclosure;
FIG. 2 is a side view of the product dispensing machine with portions removed to show internal detail; and
FIG. 3 is a flow chart of a method of operating the product dispensing machine.

### DETAILED DESCRIPTION

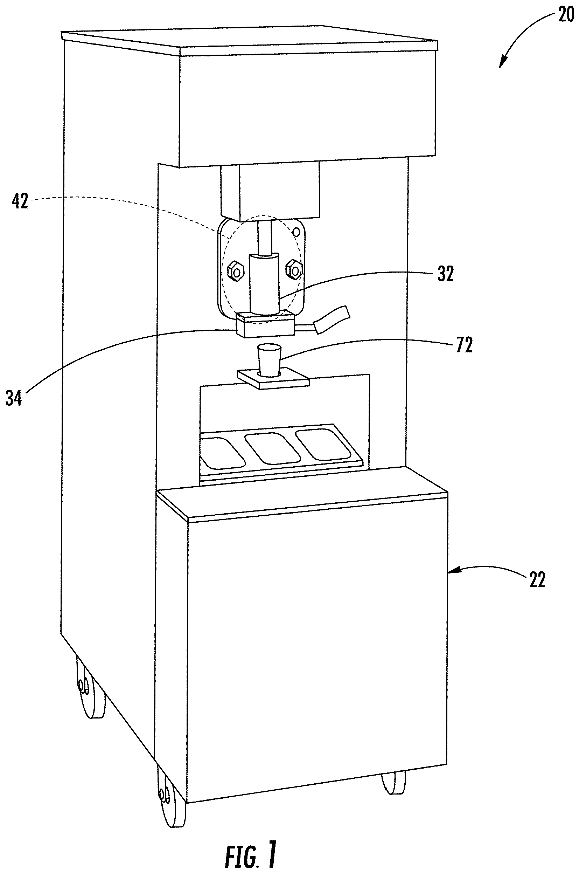

Referring to FIG. 1, a product dispensing machine 20 that prepares and dispenses a product for human consumption is illustrated. The dispensing machine 20 may be adapted to selectively dispense the product with two different consistencies both made from a common base product. In one example, the dispensed product may include an ice cream (e.g., soft served ice cream) and a shake both from a common base product. In another example, the dispensed product may include frozen yogurt and chilled yogurt both made from a common yogurt base product. In yet another embodiment, the dispensed product may include a beverage with a frozen, slush, consistency, and a chilled, liquid, consistency. It is further contemplated and understood that other products for human consumption may be applicable to the present disclosure.

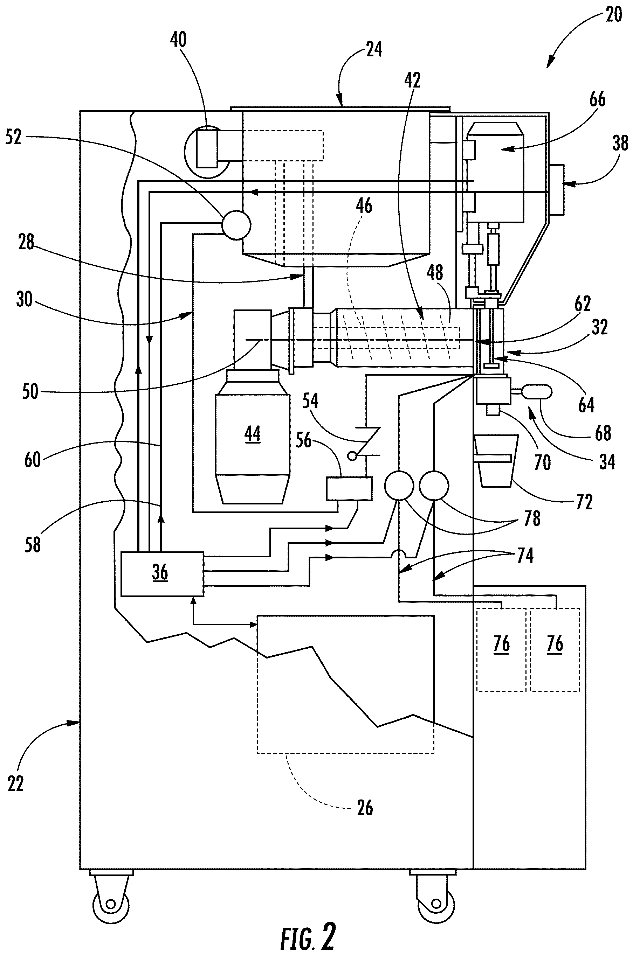

Referring to FIGS. 1 and 2, the product dispensing machine 20 may include a support structure 22 that may generally be a cabinet, a base product container 24, a refrigeration unit 26, a freeze circuit 28, a liquid circuit 30, a blending chamber assembly 32, a dispensing assembly 34, a controller 36, and a human interface 38. The base product container 24, the refrigeration unit 26, the controller 36, and the frozen and liquid circuits 28, 30 may general be housed within and supported by the cabinet 22. The blending chamber assembly 32, the dispensing assembly 34 and the human interface 38 may generally be mounted to a front side of the cabinet 22.

In the example of a product dispensing machine 20 that selectively prepares and serves ice cream and shakes, the freeze circuit 28 is adapted to receive the base product from the container 24 in liquid form and freeze the product to a frozen consistency for general storage. Upon a user demand for (as one example) a soft serve ice cream, and commanded via the user interface 38, a portion of the product in the frozen consistency (i.e., at about -8.88 °C to -7.77 °C (16 to 18 degrees Fahrenheit) may flow through the blending chamber assembly 32 and dispensed through the dispensing assembly 34 for serving to a customer.

The liquid circuit 30 is adapted to receive the base product from the container 24 in liquid form, control and/or maintain the product at a controlled flow and temperature for placement of a portion of the product in a liquid consistency into the blending chamber assembly 32. Upon a user demand for a shake, and commanded via the user interface 38, a portion of the product in the frozen consistency is placed in the blending chamber assembly 32. The blending chamber assembly 32 then blends the portion in the frozen consistency with the portion in the liquid consistency, flows the blended product in shake form to the dispensing assembly, where it is then dispensed as a shake (e.g., at about -5.55 °C to -14.44 °C (22 to 26 degrees Fahrenheit)) for service to the customer.

The refrigeration unit 26 may be generally controlled by the controller 36, and may be adapted to maintain a predefined temperature of the base product stored in the container 24, may be adapted to freeze a portion of the base product within the freeze circuit 28, and may be adapted to maintain a predefined temperature of a portion of the base product within the liquid circuit 30. As is known by one skilled in the art, the refrigeration unit 26 may include a compressor, a condenser, and an evaporator that may generally be associated with the freeze circuit 28. Although not specifically illustrated, various configurations of the refrigeration unit 26 may be implemented to control the temperature of the product (e.g., chill the product) at various locations and at differing temperatures.

The freeze circuit 28 may include a product pump 40, a freezing cylinder 42, a movement device 44, and a beater 46. The beater 46 may be any kind of device capable of mixing the product into an appropriate consistency. Examples of a beater 46 may be include a paddle and/or a helical screw. The product pump 40 may be a gear pump mounted to the product container 24, and is adapted to deliver the base product from the container 24 to the freezing cylinder 42. The product pump 40 may be controlled by the controller 36 that may receive any variety of sensory inputs, and/or may operate based on direct sensory input indicating a need for more product in the freezing cylinder 42. The freezing cylinder 42 may be an integral part of an evaporator of the refrigeration unit 26, and generally defines the boundaries of a freezing chamber 48 that may be substantially cylindrical and centered along an axis 50. The mixer 46 may generally be spiraled and is driven for rotation along the axis 50 by the motion device 44 that may include an electric motor. Operation/rotation of the mixer 46 assists in the (at least partial) freezing of the product within the chamber 48 to produce and maintain the desired frozen consistency. Other examples of a product pump 40 may include a peristaltic pump and a piston pump. Alternatively, the product dispensing machine 20 may rely on gravity feed, thus may not require a pump at least for the main first frozen product.

The liquid circuit 30 is generally routed between the container 24 and the blending chamber assembly 32, and may include a product flow control device 52, a check valve 54, and a temperature device 56. The product flow control device 52 may be a gear pump supported by the cabinet 22, and may further be located and mounted to the container 24. The flow control device 52 may be controlled by the controller 36 (see arrow 58) that may receive any variety of sensory inputs, and/or, may operate based on direct sensory input that indicates a need for more product in a delivery conduit 60 of the liquid circuit 30. It is further contemplated and understood that one embodiment of the flow control device 52 may generally share the pump 40 of the freeze circuit 28 and may further include a downstream flow control valve (not shown) that operates off of at least one sensory input (e.g., flow and/or pressure).

The temperature device 56 may generally be connected to the conduit 60 and functions to maintain the product within the conduit at a predetermined temperature. The predetermined temperature is that established to achieve the desired consistency and/or viscosity of the shake to be served. More specifically, the predetermined temperature may be based in-part on the base product composition, the volumetric ratio of blended freeze and liquid portions of the base product, and the controlled temperature of the freeze portion. It is contemplated and understood that if the predetermined temperature within the conduit 60 is lower than the product temperature within the container 24, the temperature device 56 may generally be, or include, the refrigeration unit 26. If the predetermined temperature of the liquid product portion with the conduit 60 is higher than the base product temperature within the container 24, then the temperature device 56 may include a heating element.

The check valve 54 of the liquid circuit 30 is interposed in, or intersects, the conduit 60, and may be proximate to the blending chamber assembly 32 downstream of the temperature device 56. The check valve 54 functions to prevent reverse flow of the product from the blending chamber assembly 32 and into the conduit 60.

The blending chamber assembly 32, may include an inlet port for receiving the frozen product portion of the base product from the freeze circuit 28 (i.e., through a product dispensing door 62 located at an axial end of the freezing cylinder 42), and an inlet port for receiving the liquid product portion. The blending chamber assembly 32 may further include a mixer 64 for blending the product and an electric motor 66 for driving the mixer 64 that may be controlled by the controller 36.

The dispensing assembly 34 may generally be a shut-off valve having a handle 68 and a single nozzle 70 for dispensing the product in both an ice cream form and a shake form or consistency. The dispensing assembly 34 receives the prepared product from the blending chamber assembly 32 and flows it through the nozzle 70 into an awaiting container or cone 72 when open. Further details of both a blending chamber assembly and a dispensing assembly are disclosed in United States Patent 8,402,781, issued March 26, 2013, titled: Machine for Making Both Ice Creams and Shake.

The product dispensing machine 20 may further include at least one auxiliary circuit 74 that may be a syrup circuit for adding flavor to the base product (i.e., two syrup circuits 74 illustrated). The syrup circuit 74 may include a container 76 and a pump 78 (e.g., gear pump) that may be controlled by the controller 36. In operation, a user may operate the user interface 38 requesting, for example, a particular flavor. An associated request signal is sent from the user interface 38 and to the controller 36. In-turn, the controller may output a command signal to the associated pump 78 for a particular flavor. The pump 78 operates to deliver an appropriate amount of syrup from the associated container 76 and into the blending chamber assembly 32. It is understood that the term 'container' may include a tank, a flexible bag, a tub, or any other open or closed storage device capable storing the product. It is further contemplated and understood that one or more of the containers 24, 76 may be an integral part of the machine 20 (i.e., within the machine cabinet), or may be remotely located.

The controller 36 may be an electronic controller and may further include a processor (e.g., microprocessor) that monitor and acts upon various operating parameters of the product dispensing machine. As previously described, the controller may be configured to receive requests from the user interface 38 in the form of electric signals, process the requests, and send command signals to various components to achieve the request. The controller 36 may be one controller or may be a multitude of controllers. In one example, selection between an ice cream product and a shake product may be in-part a mechanical or manual operation for ice cream, and an electrically automated operation for a shake. Some automated aspects of the product dispensing machine 20 may not be controlled or otherwise influenced by the controller 36, and instead may be directly implemented by sensory input and/or manual actuation.

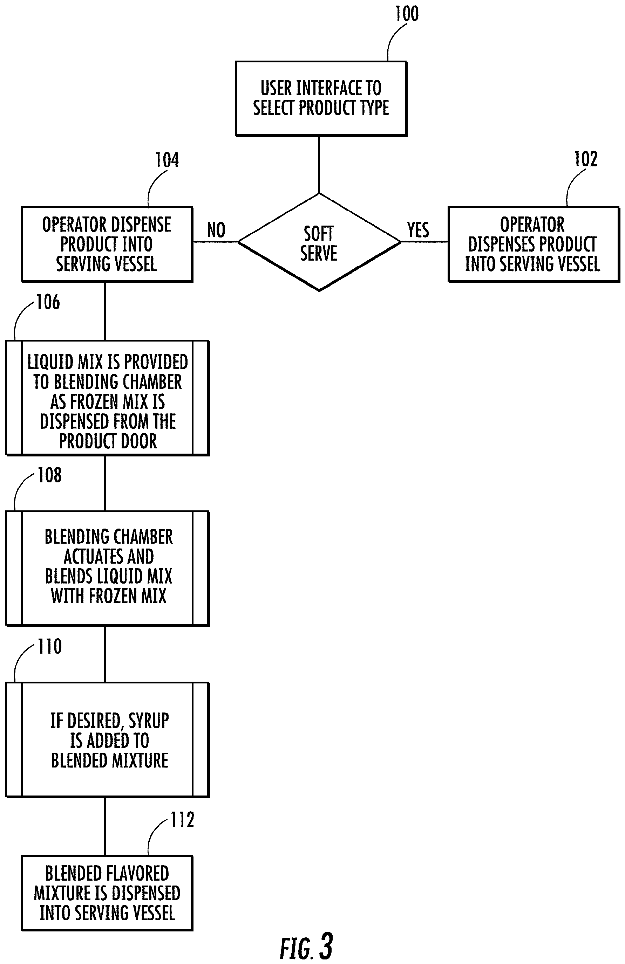

Referring to FIG. 3, a method of operating the product dispensing machine 20 includes at block 100, a user utilizing the user interface 38 to select a product type (e.g., soft serve ice cream or shake). At block 102, if a soft serve ice cream is selected the controller 36 may not require any action and the user may simply operate the dispensing assembly 34 to flow the product in an ice cream consistency into the container 32. At block 104, if a shake is selected, the user may not immediately operate the dispensing assembly 34 and instead, the shake selection may be sent to the controller 36 as an electric signal. At block 106, the controller 36 may send a command signal to the flow control device 52 of the liquid circuit 30 for delivery of a liquid portion of the base product to the blending chamber assembly 32. At block 108, the controller 36 may actuate the blending chamber assembly 32 thereby blending the liquid and frozen portions of the base product together. At block 110, and if desired, the user may, for example, through the interface 38 choose a syrup for a particular flavor. This selection is sent to the controller 36 and the controller may send a command signal to the pump 78 of the syrup circuit 74 to deliver the syrup to the blending chamber assembly 32. At block 112, and after sufficient blending, the user may then actuate the dispensing assembly 34 (i.e., open the nozzle 70) to deliver the shake product to the container 72.

Advantages and benefits of the present disclosure may include product flexibility (i.e., multiple products and combination of products may be served from a single freezing cylinder), a reduction in equipment cost, and a decrease in required equipment footprints. Other advantages may include fewer operating parts thus less parts to wear leading to improved unit reliability. Yet further, the product dispensing machine of the present disclosure may be cheaper and simpler to operate with less daily maintenance and simplified cleaning procedures.

## Claims

1. A product dispensing machine (20) comprising:
a container (24) for storing a base product;
a freeze circuit (28) constructed and arranged to extract a first portion of the base product from the container (24) and substantially freeze the first portion into a first consistency, wherein the freeze circuit (28) is in fluid communication with the container (24);
a liquid circuit (30) constructed and arranged to extract a second portion of the base product from the container (24), wherein the liquid circuit (30) is adapted to receive the base product from the container (24) in liquid form;
a blending chamber assembly (32) in fluid communication with the freeze and liquid circuits (28, 30), and constructed and arranged to blend the first and second portions into a second consistency; and
a dispensing assembly (34) in fluid communication with the blending chamber assembly (32), and constructed and arranged to selectively dispense the first portion in the first consistency, and the first and second portions in the second consistency,
wherein the liquid circuit (30) includes a pump (40) for controlling the flow of the second portion to the blending chamber assembly (32), wherein the liquid circuit (30) includes a temperature device (56) configured to control the temperature of the second portion, wherein the temperature device (56) includes one or both of a refrigeration unit (26) and a heating element;
wherein the temperature device is controlled to maintain the second portion at a predetermined temperature, wherein the predetermined temperature is a function of one of (i) a composition of the base product, (ii) a volumetric ratio of blended first and second portions that form the second consistency within the blending chamber assembly (32), and (iii) a controlled temperature of the first portion within the freeze circuit (28),
wherein the dispensing assembly (34) has a single dispensing nozzle (70) for dispensing the product in the soft ice cream consistency and the shake consistency.

2. The product dispensing machine (20) set forth in claim 1, wherein the refrigeration unit (26) is constructed and arranged to extract heat from the freeze circuit (28).

3. The product dispensing machine (20) set forth in claim 1, wherein the refrigeration unit (26) is constructed and arranged to control temperature of the base product in the container (24).

4. The product dispensing machine (20) set forth in claim 2, wherein the freeze circuit (28) includes a freezing cylinder (42) defining a chamber in fluid communication between the container (24) and the blending chamber assembly (32), and constructed and arranged to freeze the first portion via the refrigeration unit (26).

5. The product dispensing machine (20) set forth in claim 4, wherein the freeze circuit (28) includes a beater (46) disposed in the freezing cylinder (42) for working the first portion.

6. The product dispensing machine (20) set forth in any one of claims 1-4, wherein the liquid circuit (30) includes a check valve (54) for preventing flow from the blending chamber assembly (32) to the temperature device and to the container (24).

7. The product dispensing machine (20) set forth in claim 2, further comprising:
a controller (36) constructed and arranged to control the refrigeration unit (26); and
a human interface (38) constructed and arranged to select between the first and second consistencies of the base product for dispensing through the dispensing assembly (34).

8. The product dispensing machine (20) set forth in claim 7, wherein the freeze circuit (28) includes:
a freezing cylinder (42) defining a chamber (48) in fluid communication between the container (24) and the blending chamber assembly (32) and constructed and arranged to freeze the first portion via the refrigeration unit (28);
a beater (46) disposed in the freezing cylinder (42) for working the first portion; and
a pump (40) for flowing the first portion from the container (24) to the freezing cylinder, wherein the pump (40) is controlled by the controller (36).

9. The product dispensing machine (20) set forth in claim 1, further comprising:
a second container (76) for storing an additive product; and
an additive circuit (74) constructed and arranged to flow the additive product from the second container (76) and to the blending chamber assembly (32).

10. The product dispensing machine (20) set forth in claim 9, wherein the additive product includes a syrup.

## Patentansprüche

1. Produktausgabemaschine (20), die Folgendes umfasst:
einen Behälter (24) zum Aufnehmen eines Basisprodukts;
eine Gefrierschaltung (28), die konstruiert und angeordnet ist, einen ersten Abschnitt des Basisprodukts aus dem Behälter (24) zu extrahieren und den ersten Abschnitt im Wesentlichen zu einer ersten Konsistenz zu gefrieren, wobei die Gefrierschaltung (28) mit dem Behälter (24) in Fluidkommunikation steht;
eine Flüssigkeitsschaltung (30), die konstruiert und angeordnet ist, einen zweiten Abschnitt des Basisprodukts aus dem Behälter (24) zu extrahieren, wobei die Flüssigkeitsschaltung (30) angepasst ist, das Basisprodukt in flüssiger Form vom Behälter (24) zu empfangen;
eine Mischkammeranordnung (32), die mit der Gefrier- und der Flüssigkeitsschaltung (28, 30) in Fluidkommunikation steht und konstruiert und angeordnet, den ersten und den zweiten Abschnitt zu einer zweiten Konsistenz zu mischen; und
eine Ausgabeanordnung (34), die mit der Mischkammeranordnung (32) in Fluidkommunikation steht und konstruiert und angeordnet, den ersten Abschnitt mit der ersten Konsistenz und den ersten und den zweiten Abschnitt mit der zweiten Konsistenz selektiv auszugeben,
wobei die Flüssigkeitsschaltung (30) zum Steuern des Flusses des zweiten Abschnitts zur Mischkammeranordnung (32) eine Pumpe (40) beinhaltet, wobei die Flüssigkeitsschaltung (30) eine Temperaturvorrichtung (56) beinhaltet, die dazu ausgelegt ist, die Temperatur des zweiten Abschnitts zu steuern, wobei die Temperaturvorrichtung (56) eines oder beides von einer Kühleinheit (26) und einem Heizelement beinhaltet;
wobei die Temperaturvorrichtung gesteuert wird, um den zweiten Abschnitt auf einer vorbestimmten Temperatur zu halten, wobei die vorbestimmte Temperatur von einem von (i) einer Zusammensetzung des Basisprodukts, (ii) einem volumetrischen Verhältnis vom ersten und vom zweiten gemischten Abschnitt, die die zweite Konsistenz in der Mischkammeranordnung (32) bilden, und (iii) einer gesteuerten Temperatur des ersten Abschnitts in der Gefrierschaltung (28) abhängig ist,
wobei die Ausgabeanordnung (34) zum Ausgeben des Produkts in der Softeiskonsistenz und der Shakekonsistenz eine einzelne Ausgabedüse (70) aufweist.

2. Produktausgabemaschine (20) nach Anspruch 1, wobei die Kühleinheit (26) konstruiert und angeordnet ist, Wärme aus der Gefrierschaltung (28) zu extrahieren.

3. Produktausgabemaschine (20) nach Anspruch 1, wobei die Kühleinheit (26) konstruiert und angeordnet ist, eine Temperatur des Basisprodukts im Behälter (24) zu steuern.

4. Produktausgabemaschine (20) nach Anspruch 2, wobei die Gefrierschaltung (28) einen Gefrierzylinder (42) beinhaltet, der eine Kammer definiert, die mit dem Behälter (24) und der Mischkammeranordnung (32) in Fluidkommunikation steht, und konstruiert und angeordnet ist, den ersten Abschnitt via die Kühleinheit (26) zu gefrieren.

5. Produktausgabemaschine (20) nach Anspruch 4, wobei die Gefrierschaltung (28) einen Rührbesen (46) beinhaltet, der zum Bearbeiten des ersten Abschnitts im Gefrierzylinder (42) angebracht ist.

6. Produktausgabemaschine (20) nach einem der Ansprüche 1 bis 4, wobei die Flüssigkeitsschaltung (30) zum Verhindern des Flusses aus der Mischkammeranordnung (32) zur Temperaturvorrichtung und zum Behälter (24) ein Sperrventil (54) beinhaltet.

7. Produktausgabemaschine (20) nach Anspruch 2, die ferner Folgendes umfasst:
eine Steuerung (36), die konstruiert und angeordnet ist, die Kühleinheit (26) zu steuern; und
eine menschliche Schnittstelle (38), die konstruiert und angeordnet ist, zum Ausgeben durch die Ausgabeanordnung (34) zwischen der ersten und der zweiten Konsistenz des Basisprodukts auszuwählen.

8. Produktausgabemaschine (20) nach Anspruch 7, wobei die Gefrierschaltung (28) Folgendes beinhaltet:
einen Gefrierzylinder (42), der eine Kammer (48) definiert, die mit dem Behälter (24) und der Mischkammeranordnung (32) in Fluidkommunikation steht und konstruiert und angeordnet ist, den ersten Abschnitt via die Kühleinheit (28) zu gefrieren;
einen Rührbesen (46), der zum Bearbeiten des ersten Abschnitts im Gefrierzylinder (42) angebracht ist; und
eine Pumpe (40) zum Leiten des ersten Abschnitts aus dem Behälter (24) zum Gefrierzylinder, wobei die Pumpe (40) von der Steuerung (36) gesteuert wird.

9. Produktausgabemaschine (20) nach Anspruch 1, die ferner Folgendes umfasst:
einen zweiten Behälter (76) zum Aufnehmen eines Additivprodukts; und
eine Additivschaltung (74), die konstruiert und angeordnet ist, das Additivprodukt vom zweiten Behälter (76) und zur Mischkammeranordnung (32) zu leiten.

10. Produktausgabemaschine (20) nach Anspruch 9, wobei das Additivprodukt einen Sirup beinhaltet.

## Revendications

1. Machine de distribution de produit (20) comprenant :
un récipient (24) pour stocker un produit de base ;
un circuit de congélation (28) construit et agencé pour extraire une première partie du produit de base du récipient (24) et congeler sensiblement la première partie dans une première consistance, dans laquelle le circuit de congélation (28) est en communication de fluide avec le récipient (24) ;
un circuit de liquide (30) construit et agencé pour extraire une seconde partie du produit de base du récipient (24), dans laquelle le circuit de liquide (30) est adapté pour recevoir le produit de base du récipient (24) sous une forme liquide ;
un ensemble de chambre de mélange (32) en communication de fluide avec les circuits de congélation et de liquide (28, 30) et construit et agencé pour mélanger les première et seconde parties dans une seconde consistance ; et
un ensemble de distribution (34) en communication de fluide avec l'ensemble de chambre de mélange (32) et construit et agencé pour distribuer sélectivement la première partie dans la première consistance, et les première et seconde parties dans la seconde consistance,
dans laquelle le circuit de liquide (30) comprend une pompe (40) pour contrôler le débit de la seconde partie dans l'ensemble de chambre de mélange (32), dans laquelle le circuit de liquide (30) comprend un dispositif de température (56) configuré pour contrôler la température de la seconde partie, dans laquelle le dispositif de température (56) comprend un ou les deux parmi une unité de réfrigération (26) et un élément de chauffage ;
dans laquelle le dispositif de température est commandé pour maintenir la seconde partie à une température prédéterminée, dans laquelle la température prédéterminée dépend de l'un parmi i) une composition du produit de base, (ii) un rapport volumétrique des première et seconde parties mélangées qui forment la seconde consistance dans l'ensemble de chambre de mélange (32), et (iii) une température contrôlée de la première partie dans le circuit de congélation (28),
dans laquelle l'ensemble de distribution (34) a une seule buse de distribution (70) pour distribuer le produit dans la consistance molle d'une crème glacée et la consistance d'un frappé.

2. Machine de distribution de produit (20) selon la revendication 1, dans laquelle l'unité de réfrigération (26) est construite et agencée pour extraire la chaleur du circuit de congélation (28).

3. Machine de distribution de produit (20) selon la revendication 1, dans laquelle l'unité de réfrigération (26) est construite et agencée pour contrôler la température du produit de base dans le récipient (24).

4. Machine de distribution de produit (20) selon la revendication 2, dans laquelle le circuit de congélation (28) comprend un cylindre de congélation (42) définissant une chambre en communication de fluide entre le récipient (24) et l'ensemble de chambre de mélange (32), et construit et agencé pour congeler la première partie via l'unité de réfrigération (26).

5. Machine de distribution de produit (20) selon la revendication 4, dans laquelle le circuit de congélation (28) comprend un batteur (46) disposé dans le cylindre de congélation (42) pour travailler la première partie.

6. Machine de distribution de produit (20) selon l'une quelconque des revendications 1 à 4, dans laquelle le circuit de liquide (30) comprend un clapet antiretour (54) pour empêcher l'écoulement de l'ensemble de chambre de mélange (32) au dispositif de température et au récipient (24).

7. Machine de distribution de produit (20) selon la revendication 2, comprenant en outre :
un organe de commande (36) construit et agencé pour commander l'unité de réfrigération (26) ; et
une interface humaine (38) construite et agencée pour faire une sélection entre les première et seconde consistances du produit de base afin de procéder à la distribution par le biais de l'ensemble de distribution (34).

8. Machine de distribution de produit (20) selon la revendication 7, dans laquelle le circuit de congélation (28) comprend :
un cylindre de congélation (42) définissant une chambre (48) en communication de fluide entre le récipient (24) et l'ensemble de chambre de mélange (32) et construit et agencé pour congeler la première partie via l'unité de réfrigération (28) ;
un batteur (46) disposé dans le cylindre de congélation (42) pour travailler la première partie ; et
une pompe (40) pour permettre à la première partie de s'écouler du récipient (24) au cylindre de congélation, dans laquelle la pompe (40) est commandée par l'organe de commande (36) .

9. Machine de distribution de produit (20) selon la revendication 1, comprenant en outre :
un second récipient (76) pour stocker un produit additif ; et
un circuit additif (74) construit et agencé pour permettre au produit additif de s'écouler à partir du second récipient (76) et jusqu'à l'ensemble de chambre de mélange (32).

10. Machine de distribution de produit (20) selon la revendication 9, dans laquelle le produit additif comprend un sirop.
